(19) Europäisches Patentamt

**European Patent Office**

Office européen des brevets

(11) Veröffentlichungsnummer: **0 058 771**
**B1**

(12) **EUROPÄISCHE PATENTSCHRIFT**

(45) Veröffentlichungstag der Patentschrift:
06.02.85

(21) Anmeldenummer: 81109917.5

(22) Anmeldetag: 26.11.81

(51) Int. Cl.⁴: **A 23 K 1/16**

(54) Verwendung von wässrigen Natrium- oder Kaliummethioninat-Lösungen zur Supplementierung von Mischfuttern mit Methionin.

(30) Priorität: **12.02.81 DE 3105009**

(43) Veröffentlichungstag der Anmeldung:
**01.09.82 Patentblatt 82/35**

(45) Bekanntmachung des Hinweises auf die Patenterteilung:
**06.02.85 Patentblatt 85/6**

(84) Benannte Vertragsstaaten:
**AT BE CH FR GB IT LI NL**

(56) Entgegenhaltungen:
**US - A - 2 556 688**

**Feedstuffs, January 19, 1981**

(73) Patentinhaber: **Degussa Aktiengesellschaft,**
**Weissfrauenstrasse 9, D-6000 Frankfurt am Main 1 (DE)**

(72) Erfinder: **Tanner, Herbert, Dr. Dipl.-Chem.,**
**Wildaustrasse 20, D-6450 Hanau am Main 9 (DE)**
Erfinder: **Bertram, Heidrun-Leonore, Dipl.-Landwirtin,**
**Fürstenbergstrasse 4, D-6450 Hanau am Main 9 (DE)**
Erfinder: **Richter, Reinhard, Dipl.-Biologe, Nordring 6-8,**
**D-6458 Rodenbach (DE)**
Erfinder: **Spindler, Manfred, Dr. Dipl.-Chem.,**
**Kurfürstenstrasse 24, D-6450 Hanau am Main 1 (DE)**

**Beschreibung**

Gegenstand der Erfindung ist die Verwendung von wässrigen Natriummethioninat-Lösungen mit einem Gehalt zwischen 40 und 65 Gewichtsprozent oder Kaliummethioninat-Lösungen mit einem Gehalt zwischen 20 und 50 Gewichtsprozent zur Supplementierung von industriel hergestellten Mischfuttern mit Methionin.

Die essentielle Aminosäure Methionin wird seit langer Zeit in erheblichem Umfang synthetisch hergestellt und als Futtermittelzusatz, insbesondere in industriell hergestellten Mischfuttern für Geflügel, Schweine und andere landwirtschaftliche Nutztiere verwendet. Bei der Lagerung und Verarbeitung des Methionins treten aber Probleme auf. Kristallin vorliegendes Methionin ist nicht von vornherein rieselfähig und kann während der Lagerung zusammenbacken, wenn dies nicht durch geeignete aufwendige Kristallisationsbedingungen vermieden wird. Liegt das Methionin in Pulverform vor, gegebenenfalls mit einem Zusatz an die Rieselfähigkeit erhaltenden Mitteln, so bestehen bei der Handhabung die bei allen pulverförmigen Substanzen auftretenden Probleme der Staubentwicklung.

Ein weiterer Punkt ist die exakte Dosierung und homogene Verteilung von festem Methionin im Mischfutter. Industriell hergestellte Mischfutter dienen insbesondere zur Ernährung der verschiedenen landwirtschaftlichen Nutztiere, wie Geflügel, Schweine und Rinder, aber auch zur Ernährung von Haustieren. Das jeweilige Mischfutter enthält in der Regel alle für die entsprechende Tierart notwendigen Nährstoffe in ausgewogener und ausreichender Menge. Es besteht aus verschiedenen Einzelfuttermitteln, z.B. Sojaschrot, Mais, anderen Getreidearten, Mühlennachprodukten, wie Maiskleber oder Maisklebermehl, Fleischmehl, Fischmehl, aus Futterfett, Melasse, Futterkalk, Viehsalz, sowie aus weiteren Komponenten pflanzlichen, tierischen oder mineralischen Ursprungs. Zusätzlich enthalten Mischfutter Stoffe, die zur Verbesserung der ernährungsphysiologischen Wirksamkeit des Mischfutters zugesetzt werden. Hierzu zählen Aminosäuren, wie Methionin, sowie Vitamine, Mineralstoffe, Spurenelemente und Konservierungsmittel.

Die Zusammensetzung der Mischfutter ist je nach Angebot und Preis der Komponenten Änderungen unterworfen. Dabei wird die Rezeptur jedoch jeweils so gestaltet, dass die Nährstoffgehalte dem jeweiligen Bedarf der Tiere entsprechen.

Industriell hergestellte Mischfutter für Broiler, Legehennen und Mastschweine können beispielsweise die in der nachfolgenden Tabelle 1 angegebene Zusammensetzung aufweisen:

Tabelle 1

Zusammensetzung von industriell hergestellten Mischfuttern für Broiler, Legehennen und Mastschweine (Beispiele)

| Rohstoff | Broilerfutter Anteil in % | Legehennenfutter Anteil in % | Schweinemastfutter Anteil in % |
|---|---|---|---|
| Sojaschrot | 33.6 | 15.2 | 3.4 |
| Mais | 30.2 | 25.0 | 73.7 |
| Weizen | 10.0 | 14.7 | — |
| Weizenkleie | 1.3 | 15.0 | 12.0 |
| Maiskleberfutter | — | 2.8 | — |
| Sonnenblumenschrot | — | — | 6.0 |
| Luzernegrünmehl | — | 2.0 | — |
| Tapioka | 10.0 | 10.0 | — |
| Fleischmehl | — | — | 2.0 |
| Fleischknochenmehl | 3.0 | — | — |
| Tierkörpermehl | 3.0 | — | — |
| Melasse | — | 3.0 | — |
| Futterfett | 7.0 | 0.8 | — |
| Dicalciumphosphat/ phosphorsaurer Kalk | 0.46 | 0.98 | 0.56 |
| kohlensaurer Futterkalk | 0.47 | 9.45 | 1.33 |
| Viehsalz, jodiert | 0.24 | 0.36 | 0.36 |
| DL-Methionin | 0.223 | 0.157 | 0.031 |
| L-Lysin · HCl | — | — | 0.161 |
| Mineralstoffe, Spurenelemente, Vitamine, u.a. Zusatzstoffe | bis 100% | bis 100% | bis 100% |

Die verschiedenen Einzelfuttermittel und Zusatzstoffe liegen zunächst als Einzelkomponenten vor. Je nach Beschaffenheit müssen sie, z.B. durch Vermahlen, Verschroten. Trocknen oder Reinigen, vorbereitet werden. Haben die einzelnen Komponenten die notwendige Beschaffenheit, wird der eigentliche Mischvorgang in einer dafür geeigneten Mischanlage vorgenommen. Die einzelnen Mischpartien sind dabei je nach Grösse der Anlage verschieden. Zur Erzielung einer homogenen Mischung ist eine genügende Mischgenauigkeit erforderlich. Für Komponenten, die im fertigen Mischfutter nur in geringer Konzentration vorliegen, ist die Herstellung einer entsprechend höher konzentrierten Vormischung unumgänglich. Bei der Supplementierung von Mischfuttern mit Methionin werden niedrige Konzentrationen in der Grössenordnung von 0,1 bis 1,0 Gewichtsprozent angewandt. Auch hierfür ist die Herstellung einer speziellen, das Methionin in entsprechend höherer Konzentration enthaltenden Vormischung unumgänglich, um eine homogene Verteilung im Mischfutter zu erreichen.

Da das freie Methionin, das vom Organismus in der gleichen Weise utilisiert wird wie das durch enzymatische Proteinhydrolyse freigesetzte Methionin, in Wasser nur wenig löslich ist, war die Verwendung von flüssigen wässrigen Formulierungen zur Supplementierung von industriell hergestellten Mischfuttern mit Methionin bisher nicht durchführbar.

Aus der US-A-2 556 688 sind zwar auch bereits wässrige Lösungen von im wesentlichen äquivalenten Mengen Methionin und Natriummethioninat bekannt, die insbesondere als Infusionslösungen verwendet werden sollen. Bedingt durch die geringe Löslichkeit des freien Methionins ist jedoch auch der Gehalt dieser Lösungen an verfügbarem Methionin noch recht gering. Von der Verwendung reiner Alkalimetallmethioninat-Lösungen wird wegen deren hohem pH ausdrücklich abgeraten.

Jetzt wurde jedoch gefunden, dass sich wässrige Natriummethioninat-Lösungen mit einem Gehalt zwischen 40 und 65 Gewichtsprozent oder Kaliummethioninat-Lösungen mit einem Gehalt zwischen 20 und 50 Gewichtsprozent trotz ihres hohen pH völlig problemlos zur Supplementierung von industriell hergestellten Mischfuttern mit Methionin verwenden lassen. Sie weisen als Futtermittelzusatz die gleiche Methioninwirksamkeit auf wie festes Methionin, sofern sie in äquimolarer Menge eingesetzt werden.

Diese wässrigen Lösungen der Natrium- und Kaliumsalze des DL-Methionins haben gegenüber dem festen Methionin den Vorteil, dass sie auch in kleinen Mengen exakt dosiert werden können. Als flüssige Formulierungen erfordern sie bei der Supplementierung von Mischfuttern mit Methionin nicht die Herstellung einer sonst unumgänglichen, das Methionin in entsprechend höherer Konzentration enthaltenden Vormischung. Sie können vielmehr direkt in der vorgesehenen Konzentration, z.B. durch Versprühung in eine Mischkammer, mit den bereits in der gewünschten Konzentration vorliegenden übrigen Komponenten des Mischfutters homogen vermischt werden.

Zu der angestrebten Verbesserung der biologischen Wertigkeit des im jeweiligen Mischfutter enthaltenen Proteins ist der Zusatz der wässrigen Lösungen von Natrium- oder Kaliummethioninat, je nach deren Konzentration, in Mengen von etwa 0,01 bis etwa 5,0 Gewichtsprozent, bezogen auf das Gewicht des fertigen Mischfutters, erforderlich.

Die erfindungsgemäss zu verwendenden Lösungen können erhalten werden durch Auflösen von Methionin in äquivalenten Mengen Natronlauge oder Kalilauge. In besonders vorteilhafter Weise werden sie aber direkt durch Verseifung von 5-($\beta$-Methylmercaptoethyl)-hydantoin mit 1,1 bis 6 Äquivalenten Natriumhydroxid und/oder Natriumcarbonat, oder mit 1,1 bis 6 Äquivalenten Kaliumhydroxid und/oder Kaliumcarbonat erhalten. Die bei der Verseifung ebenfalls entstehenden Reaktionsprodukte Ammoniak und Kohlendioxid können bei erhöhter Temperatur quantitativ entfernt werden. Bei der Verseifung entstehen jedoch auch Natriumcarbonat oder Kaliumcarbonat, im allgemeinen mindestens ein halbes bis ein Mol pro Mol Methioninat. Wird die Verseifung des Hydantoins mit Kaliumhydroxid und/oder Kaliumcarbonat vorgenommen, so kann die nach dem Austreiben des Ammoniaks und des Kohlendioxids hinterbleibende wässrige Lösung meist direkt zur Supplementierung von Mischfuttern verwendet werden. Das in ihr enthaltene Kaliumcarbonat ist gut in Wasser löslich und stört nicht.

Wird die Verseifung des Hydantoins dagegen mit Natriumhydroxid und/oder Natriumcarbonat vorgenommen, so kann das in der nach dem Austreiben des Ammoniaks und des Kohlendioxids hinterbleibenden wässrigen Lösung enthaltene Natriumcarbonat wegen seiner im Vergleich mit Kaliumcarbonat beträchtlich geringeren Wasserlöslichkeit zu Störungen Anlass geben. Denn es neigt dazu, bei längerer Lagerung, insbesondere bei niedrigen Temperaturen, teilweise auszukristallisieren. Es ist daher empfehlenswert, das Natriumcarbonat möglichst weitgehend schon aus dem rohen Verseifungsgemisch abzutrennen.

Dies kann beispielsweise dadurch geschehen, dass man aus dem rohen Verseifungsgemisch Wasser abdestilliert, bis der Natriummethioninat-Gehalt 40 bis 65 Gewichtsprozent beträgt, und nach dem Abkühlen das ausgefallene Natriumcarbonat abtrennt. Eine andere Möglichkeit besteht darin, dass man das rohe Verseifungsgemisch zunächst auf etwa 0°C abkühlt, das ausgefallene Natriumcarbonat abtrennt und erst dann Wasser abdestilliert, bis der Natriummethioninat-Gehalt der Lösung 40 bis 65 Gewichtsprozent beträgt. In beiden Fällen kann die Abscheidung des Natriumcarbonats dadurch begünstigt und vervollständigt werden, dass man vor dessen Abtrennung Methanol oder Ethanol zusetzt und gegebenenfalls einige Zeit rührt.

Schliesslich können auch praktisch fremdsalzfreie wässrige Lösungen von Natrium- oder Kaliummethioninat dadurch hergestellt werden, dass man 5-($\beta$-Methylmercaptoethyl)-hydantoin mit einem Gemisch aus, jeweils bezogen auf das eingesetzte Hydantoin, 1 Äquivalent Natrium- oder Kaliumhydroxid und 2 Äquivalenten Calciumoxid oder -hydroxid verseift, nach beendeter Verseifung das ausgefallene Calciumcarbonat abtrennt und die hinterbleibende wässrige Natrium- oder Kaliummethioninat-Lösung zum Austreiben des enthaltenen Ammoniaks einengt, bis der gewünschte Gehalt an Natrium- oder Kaliummethioninat erreicht ist.

Durch die nachfolgenden Beispiele soll die Erfindung näher erläutert werden. Alle Prozentangaben bedeuten, sofern nicht anders angegeben, Gewichtsprozente.

*Beispiel 1*

3 Wochen alte männliche Ratten erhielten a) eine methioninarme Ration, b) die methioninarme Ration mit Zulage von 0.198% einer 56.0%igen wässrigen Natriummethioninat-Lösung, c) die methioninarme Ration mit Zulage von 0.315% einer 40%igen wässrigen Kaliummethioninat-Lösung, d) die methioninarme Ration mit Zulage von 0.1% festem DL-Methionin.

Die jeweils verwendete methioninarme Ration bestand aus folgenden Komponenten:

Zusammensetzung der Ration (%):

| | | | |
|---|---|---|---|
| Sojaschrot | | | 22.0 |
| Stärke, | DAB | 6 | 53.0 |
| Saccharose | | | 10.0 |
| Sojaöl | | | 3.0 |
| Cellulose | | | 4.0 |
| Mineralstoff- und Spurenelementmischung | | | 6.0 |
| Vitaminmischung | | | 2.0 |

Der Rohproteingehalt der Ration war 10%.

Der analysierte Aminosäurengehalt betrug (%):

| | |
|---|---|
| Methionin | 0.12 |
| Cystin | 0.19 |
| Methionin + Cystin | 0.31 |
| Lysin | 0.68 |

Die etwa 3 Wochen alten männlichen Ratten (Stamm SIV 50) mit einem Gewicht von etwa 50 g wurden in 4 Gruppen zu 8 Tieren eingeteilt. Die Tiere wurden einzeln in Käfigen bei einer Raumtemperatur von 21°C (± 1°C) gehalten. Der Hauptversuch lief 28 Tage lang. Gewicht und Futteraufnahme wurden wöchentlich festgestellt.

In Tabelle 2 sind die Ergebnisse für Gewicht, Zunahme und Futteraufnahme dargestellt:

Tabelle 2

Methioninwirksamkeit von wässrigen Natriummethioninat- und Kaliummethioninat-Lösungen bei Ratten

| Gruppe (je n = 8) | Ration | Gewicht (g) Anfangs- | Gewicht (g) End- | Zunahme (g) | Futteraufnahme (g) |
|---|---|---|---|---|---|
| 1 | Methioninarme Basalration (BR) | 50.3 | 154.8 | 104.5 | 435.7 |
| 2 | BR + 0.10% Met (0.198% einer 56.0%igen wässr. Lösung von Natriummethioninat) | 48.3 | 210.0 | 161.7 | 496.2 |
| 3 | BR + 0.10% Met (0.315% einer 40.0%igen wässr. Lösung von Kaliummethioninat) | 49.6 | 211.7 | 162.1 | 501.6 |
| 4 | BR + 0.10% Met (Gehalt 99.5%) | 53.9 | 216.4 | 162.5 | 508.4 |

Die Ergebnisse belegen, dass wässrige Lösungen von Natrium- oder Kaliummethioninat bei der erfindungsgemässen Verwendung die gleiche Methioninwirksamkeit besitzen wie festes Methionin, sofern äquimolare Mengen eingesetzt werden.

*Beispiel 2*

Die Wirksamkeit einer wässrigen Lösung von Natriummethioninat (51.7%) und einer wässrigen Lösung von Kaliummethioninat (37.3%) wurde an männlichen und weiblichen Küken der Rasse «Shaver Starbro» in einem dreiwöchigen Batterieversuch geprüft.

Als Basalration diente eine kristalline Aminosäurendiät, die alle Nährstoffe in definierter, bedarfsgerechter Zusammensetzung enthält und besonders geeignet ist, Unterschiede in der Wirksamkeit zugesetzter Substanzen zu erkennen [J. Nutr. *110*, 959 (1980)].

Diese Basalration war folgendermassen zusammengesetzt:

Tabelle 3

Zusammensetzung der Basalration

| Basalration | % | Aminosäurenmischung | % |
|---|---|---|---|
| Maisstärke | 58.7 | L-Arginin | 0.95 |
| Maisöl | 10.0 | L-Histidin | 0.33 |
| Cellulose | 3.7 | L-Lysin · HCl | 1.14 |
| Aminosäurenmischung | 19.5 | L-Tyrosin | 0.45 |
| Vitamin-Mineralstoffmischung* | 1 | L-Tryptophan | 0.15 |

Tabelle 3 (Fortsetzung)

| Basalration | % | Aminosäuren-mischung | % |
|---|---|---|---|
| NaHCO$_3$ | 1.5 | L-Phenylalanin | 0.50 |
| CaCO$_3$ | 1 | L-Threonin | 0.65 |
| CaHPO$_4$ · 2H$_2$O | 2.8 | L-Leucin | 1.00 |
| K$_2$HPO$_4$ | 0.9 | L-Isoleucin | 0.60 |
| NaCl | 0.88 | L-Valin | 0.69 |
| | | Glycin | 0.60 |
| | | L-Prolin | 0.40 |
| | | L-Glutaminsäure | 12.00 |
| Gesamt | 100 | Gesamt | 19.46 |

\* Die Vitamin-Mineralstoffmischung enthielt folgende Bestandteile pro kg Futter:
80 mg Thiamin, 100 mg Niacin, 16 mg Riboflavin, 10 mg D-Pantothensäure, 2000 mg Cholinchlorid, 5 mg Pyridoxin, 4 mg Folsäure, 0.6 mg Biotin, 20 mg DL-$\alpha$--Tocopherolacetat, 100 mg Inositol, 2 mg para-Aminobenzoesäure, 5 mg Menadion, 250 mg Ascorbinsäure, 0.02 mg Vitamin B$_{12}$, 10.000 I.E. Retinylacetat, 600 I.C.E. Cholecalciferol, 125 mg Antioxidans, 3500 mg MgSO$_4$ · 7H$_2$O, 650 mg MnSO$_4$ · H$_2$O, 500 mg Eisencitrat, 150 mg ZnSO$_4$ · H$_2$O, 20 mg CuSO$_4$ · 5H$_2$O, 9 mg Na$_2$MoO$_4$ · 2H$_2$O, 9 mg H$_3$BO, 40 mg KJ, 1 mg CoSO$_4$ · 7H$_2$O, und 2 mg Na$_2$SeO$_3$.

Dieser Basalration wurden 0.4, 0.5 und 0.6% kristallines DL-Methionin bzw. die methioninäquivalenten Mengen der wässrigen Lösungen von Natriummethioninat und Kaliummethioninat zugesetzt. Jede Versuchsgruppe bestand aus 72 Tieren (6 Wiederholungen zu je 12 Tieren). Die Tiere erhielten das Futter in Mehlform ad libitum. Wasser stand ihnen ständig aus Automaten zur Verfügung. Gemessene Versuchskriterien waren Körpergewicht, Futteraufnahme sowie Futterverwertung.

Zu Versuchsbeginn waren die männlichen Tiere 5 und die weiblichen Tiere 6 Tage alt.

Die Ergebnisse nach 21 Versuchstagen sind in Tabelle 4 aufgeführt:

Tabelle 4

Durchschnittliche Gewichtszunahme, Futteraufnahme und Futterverwertung nach 21 Versuchstagen

| Versuchsgruppe | Zunahme (g/Tier) | Futteraufnahme (g/Tier) | Futterverwertung (kg Futter / kg Zunahme) |
|---|---|---|---|
| I 0.40% Methionin | 222 | 544 | 2.45 |
| II 0.50% Methionin | 386 | 741 | 1.92 |
| III 0.60% Methionin | 484 | 830 | 1.72 |
| IV 0.40 % Methionin (0.88% 51.7%iger Natriummethioninat-Lösung) | 219 | 523 | 2.39 |
| V 0.50% Methionin (1.11% 51.7%iger Namet-Lsg.) | 368 | 710 | 1.93 |
| VI 0.60% Methionin (1.33% 51.7%iger Namet-Lsg.) | 462 | 796 | 1.74 |
| VII 0.40% Methionin (1.35% 37.3%iger Kaliummethioninat-Lösung) | 220 | 530 | 2.41 |
| VIII 0.50% Methionin (1.69% 37.3%iger Kmet-Lsg.) | 376 | 729 | 1.94 |
| IX 0.60% Methionin (2.03% 37.3%iger Kmet-Lsg.) | 472 | 821 | 1.74 |

Der besondere Vorteil der in Beispiel 2 verwendeten Ration besteht darin, dass Unterschiede in der ernährungsphysiologischen Wirksamkeit, die zwischen verschiedenen Zusatzstoffen möglicherweise existieren, besonders deutlich und signifikant festgestellt werden können. Dabei wurden die bei landwirtschaftlichen Nutztieren gemessenen Leistungsparameter Gewichtszunahme, Futteraufnahme und Futterverwertung als Kriterien zugrunde gelegt. Das Ergebnis zeigt, dass durch die erfindungsgemässe Verwendung von wässrigen Natriummethioninat- und Kaliummethioninat-Lösungen die Proteinwertigkeit des Futters in gleicher Weise verbessert wird wie durch Supplementierung mit äquimolaren Mengen an festem Methionin. In keinem Fall wurden signifikante Unterschiede festgestellt.

**Patentanspruch**

Verwendung von wässrigen Natriummethioninat-Lösungen mit einem Gehalt zwischen 40 und 65 Gewichtsprozent oder Kaliummethioninat-Lösungen mit einem Gehalt zwischen 20 und 50 Gewichtsprozent zur Supplementierung von industriell hergestellten Mischfuttern mit Methionin.

**Revendication**

Utilisation de solutions aqueuses de méthioninate de sodium avec un teneur comprise entre 40 et 65% en poids ou de solutions aqueuses de méthioninate de potassium avec une teneur de 20 à 50% en poids pour supplémenter avec de la méthionine des aliments composés pour animaux, fabriqués industriellement.

**Claim**

The use of aqueous sodium methioninate solutions having a content of from 40 to 65% by weight or potassium methioninate solutions having a content of from 20 to 50% by weight for supplementing industrially produced mixed provender with methionine.